(19) **Europäisches Patentamt European Patent Office Office européen des brevets**

(11) **EP 4 557 142 A1**

(12) **EUROPEAN PATENT APPLICATION**

(43) Date of publication:
21.05.2025 Bulletin 2025/21

(21) Application number: 24213580.4

(22) Date of filing: 18.11.2024

(51) International Patent Classification (IPC):
**G06F 21/57** (2013.01)

(52) Cooperative Patent Classification (CPC):
**G06F 21/577**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 19.11.2023 IL 30867123

(71) Applicant: **Deutsche Telekom AG**
**53113 Bonn (DE)**

(72) Inventors:
• **BENSHIMOL, Lavi**
**8481726 Beer Sheva (IL)**

• **SHABTAI, Asaf**
**7684200, Hulda (IL)**
• **MIMRAN, David**
**6215505 Tel Aviv (IL)**
• **ELOVICI, Yuval**
**7986400 Arugot (IL)**
• **BRODT, Oleg**
**8471621 Beer Sheva (IL)**
• **LEHMANN, Heiko**
**12587 Berlin (DE)**

(74) Representative: **Weickmann & Weickmann PartmbB**
**Postfach 860 820**
**81635 München (DE)**

(54) **RANKING CRITICALITY OF ASSETS FOR SERVERLESS APPLICATIONS**

(57) A computerized system for ranking the criticality of assets for serverless applications, comprising a server having at least one processor and associated software, which are adapted to prioritize assets within a serverless application based on their criticality level, using the AHP and Perimeterless ontology; decompose the prioritization task by generating a two-level hierarchy that includes a higher business process level and a lower asset type level; in the higher level, assign the resources of a given application to different business processes by the experts; in the lower level, automatically categorize each resource by an asset type, based on Perimeterless ontology; use the AHP to perform pairwise comparisons between the resources at each level; examine the internal consistency of each user, to ensure the validity of the prioritization process; choose the most critical assets to protect against potential cyberattacks.

Fig. 1

**Description**

**Field of the Invention**

The present invention relates to the field of cyber security. More particularly, the invention relates to a method for ranking the criticality of assets for serverless applications.

**Background of the Invention**

Serverless computing, a rapidly advancing facet of cloud-based environments, presents unique benefits such as reduced operational efforts, efficient multi-region scaling, and cost-effective pay-as-you- go deployments [18, 22]. It simplifies application abstraction by decomposing monolithic structures into stateless computational units [9, 16]. However, its shared security responsibility model brings about fresh cybersecurity challenges [25].

In CSP-managed serverless environment, application developers use serverless functionality provided by a CSP to develop applications and services. Managed serverless CSPs enable application developers to focus on the actual logic required by the target application without worrying about developing and maintaining the required underlying infrastructure [23].

Due to the fact that the application infrastructure is managed by the CSP, a shared responsibility model has emerged, in which developers are responsible for the application logic and data, and the responsibility of maintaining the environment, including the container management, hosted operating system, virtualization, server hardware, security, and network infrastructure, falls on the CSP. Under the new shared responsibility model, the application developer's responsibilities are reduced to just their application code and data. Due to the shared responsibility model, application maintainers, including security teams, have reduced observability of application execution since the CSP manages system logging and other environment resources, limiting access to contextual information [17]. Furthermore, from a security perspective, it is extremely difficult to defend serverless applications with existing security capabilities which evolved in the non-managed world, as these measures require lower-level access to the underlying infrastructure, which is not accessible under the shared model. The inability to secure and harden the underlying infrastructure and the limited visibility into serverless applications' execution increases the need to leverage semi-structured managed serverless application logs to improve security capabilities. The proposed framework aims to address this need. Serverless architecture is most commonly used for APIs, stream/asynchronous processing, and time-based batch and operational tasks [11]. Applications with irregular workloads are also great candidates for serverless platforms, as they benefit from the built-in cost-saving scalability [11]. The serverless application domain includes four main categories of services: application integration, compute, storage, and IAM [3]. Each serverless CSP, including AWS,1 Azure,2 and GCP,3 provides application developer the following services/building blocks to build a serverless application:

Serverless functions - also known as Function as a Service (FaaS), a fully managed compute service model that allows developers to run their code without provisioning or managing servers. The CSP is responsible for scaling, deploying, and managing the underlying infrastructure, while the developer is only responsible for writing and deploying their code [8].

- **Serverless storage resources** - The CSP offers serverless storage services, such as object storage and NoSQL tables. These services provide a number of benefits, such as automatic scalability, built-in availability, and no charge for idle capacity [20].
- **Serverless application components** - These are ready-made and reusable software components that can be used for orchestrating and managing serverless applications, such as GraphQL APIs, function workflow management tools, and notification and event triggering services [12].
- **Identity and access management (IAM)** - Any action or access to resources performed in the CSP serverless environment is controlled and managed by the IAM framework, which sets the permissions and policies for individuals and groups [19]. Attribute-based access control (ABAC) is a popular approach for managing permissions in cloud environments. With ABAC, permissions are granted based on the attributes of the user and the resource being accessed. This approach has following advantages: (1) provides fine-grained access control and can help reduce the number of role assignments required; (2) provides greater flexibility and enables dynamic access control decisions based on the attributes of the user and resource [6]; (3) provides lower management costs compared to the traditional role-based access control access (RBAC); and (4) it can be be translated from existing RABC framework [5].

Monitoring serverless applications entails various challenges, including identifying and mitigating application-layer attacks due to the high granularity of cloud service provider (CSP) logging capabilities. Additional complications arise from limited root cause analysis capabilities, difficulties in using existing cybersecurity frameworks, and a general lack of knowledge about managed serverless environments.

Existing security frameworks for serverless applications do not comply with different application architectures, requiring significant expertise, time, and effort to implement. This can add latency and computational overhead to the application flow.

It is therefore an object of the present invention to provide a method and system for efficiently ranking criticality of assets for serverless application.

It is another object of the present invention to provide a method and system for prioritizing alerts and improving the cybersecurity posture, using standard application audit logs.

It is a further object of the present invention to provide a method and system for enhancing application observability, while enhancing the cybersecurity durability in serverless contexts.

Other objects and advantages of the invention will become apparent as the description proceeds.

## Summary of the Invention

A method for ranking the criticality of assets for serverless applications, comprising:

a) prioritizing assets within a serverless application by a computerized device/server with at least one processor, a memory and associated software, based on their criticality level, using the Analytic Hierarchy Process (AHP) and Perimeterless ontology;
b) decomposing the prioritization task by generating a two-level hierarchy that includes a higher business process level and a lower asset type level;
c) in the higher level, assigning the resources of a given application to different business processes by the experts;
d) in the lower level, automatically categorizing each resource by an asset type (Lambda function, DynamoDB) based on the Perimeterless ontology;
e) using the AHP to perform pairwise comparisons between the resources at each level;
f) examining the internal consistency of each user, to ensure the validity of the prioritization process; and
g) choosing the most critical assets to protect against potential cyberattacks.

The asset type may be selected from the group of:

- Lambda function;
- DynamoDB.

The method may further comprise the steps of:

a) differentiating between the importance of each resource by dividing the assets in each business process into disjoint groups according to their type;
b) conducting a pairwise comparison in the context of one component of the CIA (confidentiality, integrity, availability) triad model using a pairwise comparison between the identified business processes;
c) calculating the score for each asset according to the AHP for each annotator individually; and
d) calculating an expert rating for any given resource by multiplying the criteria ranking.

The context may be selected from the group of:

- Confidentiality;
- Integrity;
- Availability.

The method may further comprise the steps of:

a) deciding which business process is riskier with respect to the given context;
b) comparing the business processes; and
c) comparing the resources in each business process group.

The method may further comprise the steps of:

a) dynamically validating internal consistency of each annotator during ranking, using the consistency ratio (CR) measure;

b) examining the external agreement among different annotators using Kendall's W test;

c) calculating the average score of each element at its respective level; and

d) assigning a propagated score for each instance for each CIA context and for each service instance.

A computerized system for ranking the criticality of assets for serverless applications, comprising:

a) a server having at least one processor and associated software, which are adapted to:

b) prioritize assets within a serverless application based on their criticality level, using the AHP and Perimeterless ontology;

c) decompose the prioritization task by generating a two-level hierarchy that includes a higher business process level and a lower asset type level;

d) in the higher level, assign the resources of a given application to different business processes by the experts;

e) in the lower level, automatically categorize each resource by an asset type (Lambda function, DynamoDB) based on the Perimeterless ontology;

f) use the AHP to perform pairwise comparisons between the resources at each level;

g) examine the internal consistency of each user, to ensure the validity of the prioritization process; and

h) choose the most critical assets to protect against potential cyberattacks.

The computerized system may be further adapted to:

a) differentiate between the importance of each resource by dividing the assets in each business process into disjoint groups according to their type;

b) conduct a pairwise comparison in the context of one component of the CIA triad model using a pairwise comparison between the identified business processes;

c) calculate the score for each asset according to the AHP for each annotator individually; and

d) calculate an expert rating for any given resource by multiplying the criteria ranking.

The computerized system may be further adapted to:

a) decide which business process is riskier with respect to the given context;

b) compare the business processes;

c) compare the resources in each business process group.

The computerized system may be further adapted to:

a) dynamically validate internal consistency of each annotator during ranking, using the consistency ratio (CR) measure;

b) examine the external agreement among different annotators using Kendall's W test;

c) calculate the average score of each element at its respective level; and

d) assign a propagated score for each instance for each CIA context and for each service instance.

## Brief Description of the Drawings

The above and other characteristics and advantages of the invention will be better understood through the following illustrative and non-limitative detailed description of preferred embodiments thereof, with reference to the appended drawings, wherein:

- Fig. 1 shows an Airline Booking architecture, according to an embodiment of the invention;
- Fig. 2 shows an AHP Airline Booking architecture, according to an embodiment of the invention Airline Booking hierarchy; and
- Fig. 3 illustrates the criticality of assets, an Airline Booking confidentiality ranking.

## Detailed Description of the Present Invention

The present invention is directed to a method for ranking the criticality of assets (resources and services) for serverless applications. The method of the present invention provides a security scheme for managed serverless environments, using the perimeterless ontology from the Perimeterless stack (described in Ben-Shomol et al: "Observability and Incident Response in Managed Serverless Environments Using Ontology-Based Log Monitoring", https://arxiv.org/html/2405.07172vl), while employing the Analytic Hierarchy Process (AHP) [24] to rank assets, based on their criticality, to allow making more informed decisions to improve cybersecurity in serverless environments.

The Perimeterless stack is a novel approach that relies on a graph-based methodology and a unique log-based ontology and enables audit logs to be transformed into contextualized graphs. The Perimeterless stack introduces a novel three-layer security scheme designed for fully managed serverless environments, based on a zero trust architecture. The perimeterless ontology is based on serverless application logs and facilitates the transformation of these logs into an application activity knowledge graph, so as to categorize the assets within each business process into disjoint groups based on the asset's type.

This method reduces the effort required by experts to rank resources, though it does necessitate an understanding of the application resources and their importance to the business process (a set of logically related tasks or activities performed to achieve a defined business outcome) and flow. The method provides a systematic approach to prioritize alerts and improve the cybersecurity posture, using standard application audit logs and thereby, becomes an expert-based tool for asset criticality ranking. This tool enhances application observability, enables prioritization of application resource alerts, and consequently enhances the cybersecurity durability in serverless contexts.

To demonstrate and evaluate the proposed Perimeterless framework, the "Airline Booking" serverless application deployed on top of AWS was used. This testbed application is well-described in the literature and is commonly used as a benchmark for research [10]. As in a typical real-world setting, the application produces activity logs, which serve as input for the analysis. The application can be found via the following GitHub link.6.

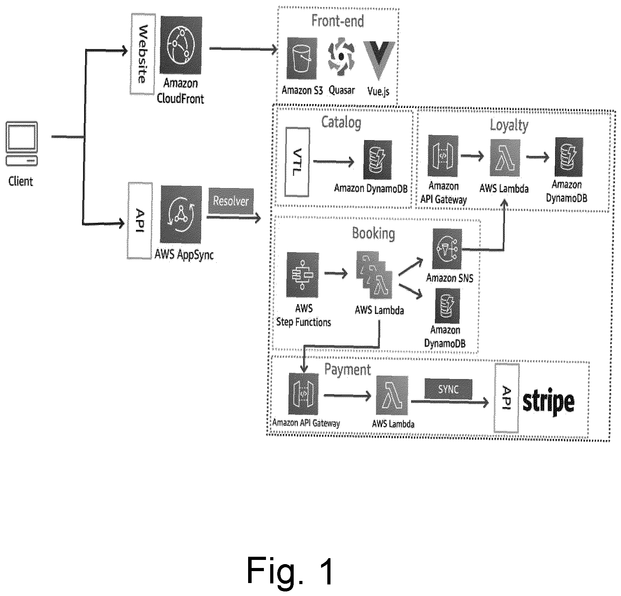

Fig. 1 illustrates an Ai rline Booking application's architecture, which consists of several AWS serverless services: four DynamoDB tables, four S3 buckets (Amazon S3 is an object storage service that stores data as objects within buckets, where a bucket is a container for objects), the SQS (queue) and SNS (notification) services, the AppSync API (AWS AppSync enables developers to connect their applications and services to data and events with secure, serverless and high-performing APIs) service, and 12 Lambda functions (anonymous functions written in a way that allows them to perform short specific operations, withour requiring complete functions). The AWS CloudTrail service has been utilized to record the API activity of the application's storage and functions.

There are two main types of business processes in the Airline Booking application's architecture. The first type of a business process is based on a short-timed serverless function which facilitates access to a data source in the system. It comprises the Catalog and Loyalty processes which fetch information from a DynamoDB table and return the data to the user (the flight catalog and loyalty points, respectively).

The second type is the Booking process, which is initiated by an API request to book a flight and triggers a series of data access operations and Lambda function invocations in order to complete a flight booking transaction. The booking process is data-driven, depending on the user's previous action, like choosing available seats on a selected flight, viewing the loyalty point balance, changing an existing booking, etc.

A cloud-based testbed has been established, which allows running a serverless application (e.g., Airline Booking) in a controlled environment and monitor the application's execution by collecting the activity logs. The activity logs derived from the controlled environment of the testbed allows performing analysis and evaluation. In order to emulate benign and anomalous activity in the testbed, a simulation script with multiple application use scenarios (as described in Section 3.2) has been executed, while configuring AWS CloudTrail logging and activated management and event data logging on all of the cloud resources. The activity log data from the application was collected from the AWS CloudWatch audit logs that include information about cloud resource operations (HTTP and event-triggered) and the permissions used.

A simulation script has been used to mimic traffic and user behavior in order to create realistic application use scenarios. Activity logs were generated for each scenario, allowing us to further analyze the behavior of components comprising the application. Simulations and recordings of the serverless application were performed by creating Python scripts that activate functions logically, as well as simulations of errors that might occur if the user was not well versed in the application. Then, several attacks have been implemented by modifying the logic of some Lambda functions. The simulation starts when the script that simulates a user opens the browser with the address of the application and performs one of the following actions at random: booking a flight, checking the loyalty point balance, or checking existing flight bookings.

Each action triggers a different business process and can also result in different action sequences. For example, a booking could be one- or two-ways; if the booking chosen by the script is one-way, a random airport from a list will be served as the departure location while another will serve as the arrival location.

**Attack scenarios**

During simulations, the application is primarily run in a benign setting (benign mode). To simulate an attack in some of the application runs, the logic of some serverless functions was modified to simulate an attack (anomaly mode), while implementing the anomaly mode in approximately 2% of the runs. The simulated attack scenarios are:

(1) **Data Leakage** - the confirm booking Lambda function has been modified such that instead of sending the data to private storage, it was sent to a publicly accessible bucket.

(2) **Denial of Wallet (DOW)** - the reserve booking Lambda function has been modified to execute multiple dummy directed API requests to a DynamoDB table, with the intention of depleting its allocated budget.

Two data source services to monitor activity were chosen, primarily because similar monitoring tools from Azure and Google Cloud have comparable capabilities [14].

CloudTrail - This service provides log collection for each API call interacting with the monitored resource. These API calls might be a CRUD operation (four basic operations of persistent storage: Create, Read, Update, and Delete) on a table in a database, a call to an internal function, or any other use of an AWS service. For each application that to be monitored and collect logs from, a "trail" was created by manually selecting the resources to be monitored (whose logs will be collected), such as S3, Lambda functions, DynamoDB (a fully managed proprietary NoSQL database offered by Amazon.com), etc.

CloudWatch - This service enables us to manage, group, and analyze the logs obtained from CloudTrail trails. Similar monitoring tools with the same capabilities are available by other cloud providers such as Azure and Google Cloud [14].

Every serverless application consists of various resources (e.g., lambda functions, storage services), which interact with each other to obtain a specific goal (e.g., booking a flight). An application flow is the order of resource execution for a specific goal. Prioritizing the assets (resources and services) of a given serverless application based on their criticality (i.e., the risk they pose to the application flow in the case of a cyberattack), can assist cybersecurity personnel by improving the observability of the cloud-based environment. Such prioritization can also serve as a useful reference point when evaluating cybersecurity incidents or implementing targeted defenses, ultimately improving the overall resilience of the cloud-based environment. Although asset prioritization based on an asset's risk level provides numerous benefits, it is difficult to rank the assets concerning their criticality based on application flow depends on various factors. First, prioritizing assets depends mostly on the application flow and the assets involved in this flow. For example, consider an application flow comprised of two assets: a Lambda function called L1 that inserts and extracts data using a S3 bucket called B1. If B1 is attacked, only the L1 Lambda function would be affected (since L1 interacts solely with B1). However, attacking an S3 bucket accessed by multiple Lambda functions could impact those functions and consequently impact other application flows. Therefore, the potential damage in the latter scenario is more challenging to quantify than that of the first scenario. Second, asset criticality is also based on the nature of data being transmitted within a given application flow. The transmission of sensitive data, such as credit card information, is considered more crucial and significant than the transmission of arbitrary commands. A cybersecurity expert should consider this when assessing the overall criticality of the assets involved in the application flow. Finally, the activities performed by applications are dynamic in nature. Given this, it can be challenging to determine which application flows hold greater significance than others. For example, there may be a flow of activities that only occurs twice daily (e.g., an update process) yet is important, while another flow of activities (e.g., weather forecasting) occurs every three hours but is of much less importance.

In order to prioritize application assets, a systematic and organized process is required to comprehensively understand the relevant application processes involved. In 2008, Saaty [24] proposed the Analytic Hierarchy Process (AHP - a decision-making method to rank considered alternatives and to derive relative priorities in decision making, based on pairwise comparisons). These comparisons are judged by experts using a scale of absolute judgments that represents how much one element in the scale dominates another with respect to a given attribute. Using AHP, experts can use small application with dozens of resources can result in a few hundred comparisons which must be manually performed by experts. The naive and straightforward way of comparing each resource with all other resources requires CNaive pairwise comparisons, calculated using: $C\text{Naive} = \dfrac{n\,(n-1)}{}$ , where $n$ is the total number of entities. Using the AHP hierarchy allows us to improve the ranking process by creating a hierarchical structure.

If $m_i$ is the number of entities in the $i$-th subgroup and the number of pairwise comparisons for the $i$-th subgroup ($Cgroup_i$) be:

$$C_{group_i} = \frac{m_i(m_i-1)}{2}$$

In this case, the total number of pairwise comparisons ($C_{AHP}$) is:

$$C_{AHP} = \sum_{i=1}^{k} C_{group_i}$$

where *k* is the total number of subgroups.

The invention provides a novel expert-based tool for prioritizing assets within a serverless application based on their criticality level, using the AHP and the proposed Perimeterless ontology (data ontology is a structured and organized representation of knowledge about a specific domain). Using this expert-based tool, which includes sophisticated pairwise comparisons and expert judgments, cybersecurity personnel can better estimate the relative magnitude of attributes of the decision criteria. Such prioritization can assist cybersecurity personnel in choosing the most critical assets to protect against potential cyberattacks, resulting in improved cybersecurity in the serverless environment.

**Expert-Based Asset Criticality Ranking Tool**

In order to prioritize assets within a given serverless application, an expert-based tool that utilizes the AHP and the Perimeterless ontology is provided. Prioritizing assets may be performed, for example, by a computerized device or a server with at least one processor, a memory and associated software. The expert-based tool decomposes the challenging problem of asset prioritization into smaller sub-problems by generating a two-level hierarchy that includes the business process level and the asset type level. In the higher level, the business process level, the resources of a given application are assigned to different business processes by the experts. In the lower level, each resource is automatically categorized by asset type (Lambda function, DynamoDB) based on the Perimeterless ontology. Then, AHP is used to perform pairwise comparisons between the resources at each level. Finally, to ensure the validity of the prioritization process, the internal consistency of each user is examined (internal consistency is a measure based on the correlations between different items on the same test, or the same subscale on a larger test. It measures whether several items that propose to measure the same general construct produce similar scores).

To demonstrate the proposed method, the following example is used:

It is assumed that an application A, which consists of eight Lambda functions (L1-L8) and seven S3 buckets (S1-S7).

Due to a large number of comparisons, the assets of a given application are divided into groups based on their business processes (meaning that each asset could be in multiple groups of business processes). The assignment of each asset to its associated business processes should be performed by experts who know the application and its application flows. In this example, it is assumed that the experts identify three main business processes in application A: B1, B2, and B3. The B1 business process includes three Lambdas (L1, L2, and L3) and two S3 buckets (S1 and S2); B2 includes three Lambdas (L4, L5, and L6) and two S3 buckets (S3 and S4); and B3 consists of two Lambdas (L7 and L8) and three S3 buckets (S5, S6, and S7).

*Generating the lower level of the hierarchy*

Dividing the resources based on the business processes they are involved in, reduces the number of pairwise comparisons experts must perform. However, this division solely is insufficient in the prioritization of assets based on their criticality. It is difficult to compare (and prioritize) the criticality of assets in terms of the risk they pose to the application in the case of a cyberattack. For example, misusing a Lambda function can result in disabling the app (availability). However, misusing a S3 bucket can result in data leakage (confidentiality). In addition, every type of resource has its own threats.

Therefore, in order to differentiate between the importance of each resource, the assets in each business process are divided into disjoint groups according to their type (e.g., Lambda function, API gateway, S3 bucket). To assign the type for each resource in each business process, the Perimeterless ontology is used, which defines a given application's resources and their types. Regarding application A in this example, in the B1 business process, two groups (G1 and G2) are created. G1 contains all of the Lambdas (L1, L2, and L3), whereas G2 contains all of the S3 buckets (S1 and S2). In the same manner, two groups are created in the B2 business process (G3 and G4); G3 contains all Lambdas (L4, L5, and L6), and G4 contains the S3 buckets (S3 and S4). In the B3 business process, two groups are also created; the G5 group includes L7 and L8, whereas G6 includes S5, S6, and S7. Using the naive approach will require 105 pairwise comparisons, while using AHP will only require 17 comparisons.

*Generating the higher level of the hierarchy*

According to the AHP, pairwise comparisons between all resources should be conducted to derive priorities for decision-making associated with asset criticality. However, this is a challenging process given that a small application with dozens of resources can result in a few hundred comparisons which must be manually performed by experts.

Pairwise *comparison in a given context*

After grouping the resources in each business process by type, cybersecurity experts must conduct a pairwise comparison in the context of one component of the CIA (Confidentiality, Integrity, Availability) triad model (Confidentiality: to prevent sensitive information from unauthorized access attempts; Integrity: the consistency, accuracy and trustworthiness of data must be maintained over its entire lifecycle; Availability: Information should be consistently and readily accessible for authorized parties. The CIA triad describes a model designed to guide policies for information security within an organization), as follows: First, a pairwise comparison (a process for ranking or choosing from a group of alternatives by comparing them against each other in pairs, i.e. two alternatives at a time) should be conducted between the identified business processes. The comparison between two entities should utilize a scale of one to nine, where a score of one indicates that the first entity is the most critically important, a score of nine indicates that the second entity is the most critically important, and a score of five indicates that the two entities have equal importance. With respect to this example, it is assumed that the context is confidentiality.

Three comparisons are performed between the identified business processes (B1, B2, and B3), as follows: B1-B2, B1-B3, and B2-B3. This means that the cyber experts first decide which business process is riskier with respect to the given context (confidentiality, integrity, or availability) - B1 or B2? After comparing the business processes, comparisons of the resources in each business process group (recall that the resources are grouped by type) should be conducted. This means that in B1, L1- L2, L1-L3, L2-L3, and S1-S2 are compared (four comparisons). In the same manner, there are four comparisons in B2 (L4-L5, L4-L6, L5-L6, S3-S4) and four comparisons (L7-L8, S5-S6, S5-S7, and S7-S8) in B3.

In the pairwise comparison, the score for each asset is calculated according to the AHP [24]. This is done for each annotator individually. An expert rating for a given resource is calculated by multiplying the criteria ranking.

For example, Table 1 shows the decision tree to calculate the criticality score of L1: B1G1L1 which is 0.70.60.6.

Table 1: AHP rank calculation example

| Bussiness level | B1(0 .7) | | | | B2(0. 15) | | | | | B3(0. 15) | | | | |
|---|---|---|---|---|---|---|---|---|---|---|---|---|---|---|
| Resource type | G1(0 .6) | | G2(0.4) | | G3(0 .1) | | | G4(0.9) | | G5(0.5) | | G6(0 .5) | | |
| Resource | L1(0. 6) | L2(0. 2) | L3(0. 2) | S1(0 .8) | S2(0 .2) | L4(0. 4) | L5(0. 4) | L6(0. 2) | S3(0 .7) | S4(0 .3) | L7(0. 8) | L8(0. 2) | S5(0 .4) | S6(0 .3) | S7(0. 3) |
| Rank | 0.25 2 | 0.08 4 | 0.08 4 | 0.22 4 | 0.05 6 | 0.00 6 | 0.00 6 | 0.00 3 | 0.09 45 | 0.04 05 | 0.06 | 0.01 5 | 0.03 | 0.02 25 | 0.02 25 |

*Validating internal consistency*

In this step, the internal consistency of each annotator is validated. According to the AHP, CR values that are lower than 0.1 are considered consistent. Therefore, if the CR score value exceeds 0.1, the annotators are requested to update their ranking to maintain consistency. By the end of this step, each annotator should have a CR value that is less than 0.1 for all comparison levels. This validation is performed dynamically during ranking, using the consistency ratio (CR) measure (a metric that indicates the consistency between pairwise comparisons). According to the AHP, CR values that are lower than 0.1 are considered consistent. Therefore, if the CR score measure exceeds 0.1, the annotators are requested to update their ranking to maintain consistency. By the end of this step, each annotator should be a CR value that is less than 0.1 for all comparison levels.

*Testing external agreement*

In this step, the external agreement among different annotators is examined. The evaluation is performed using Kendall's W test (i.e., Kendall's coefficient of concordance), which is a nonparametric statistical test commonly used for assessing agreement among raters [13, 15]. Kendall's W ranges from zero (no agreement) to one (complete agreement), where a value over 0.6 is considered strong agreement. Finally, the average score of each element at its respective level are calculated. At the end of this step, each service instance (a service instance defines the elements of a service) is assigned a propagated score for each instance for each CIA context.

**A Demonstration of Asset Criticality Assessment**

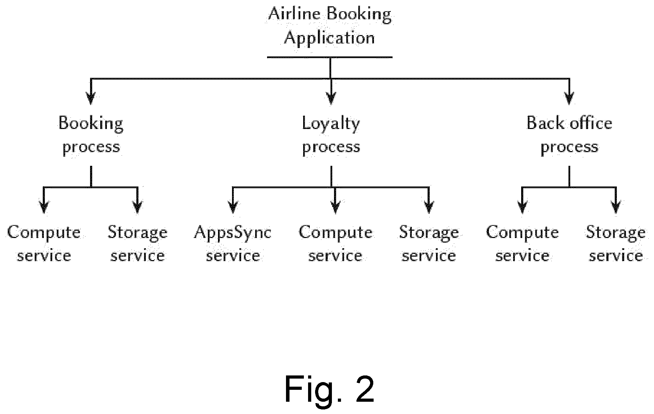

To evaluate the proposed expert-based tool for prioritizing assets, the Airline Booking application described above and the Perimeterless ontology were used. First, the Airline Booking application have been decomposed into its main business processes: booking flights, handling loyalty credits, and managing the back office (as shown in Fig. 2). The business processes were identified in the documentation provided by the application (see Section 3). Next, using the Perimeterless ontology, resources were grouped into inner groups for each business process. The booking process includes compute and storage services, the loyalty process includes AppSync, and compute and storage services, and the back office process includes compute and storage services (as shown in Fig. 2). The resulting hierarchy for the Airline Booking application is presented in Fig. 2. Using the AHP hierarchy, a pairwise-based questionnaire was created. Later, six annotators who have implemented, simulated, and studied the application completed the questionnaire. The context the experts used to weight each comparison is the confidentiality of the application information. The questionnaire's hierarchy was created as described in Section 4.1, resulting. In addition, among the experts, a Kendall-W score of 0.7179 has been obtained, which is considered strong agreement. The ranking starts at one, a value which is assigned to the most critical resource in the context of the questionnaire. In this evaluation, the back office process was considered the most critical by all of the experts. The second most critical process was the loyalty process, while the least critical process was the booking process which received the lowest rank.

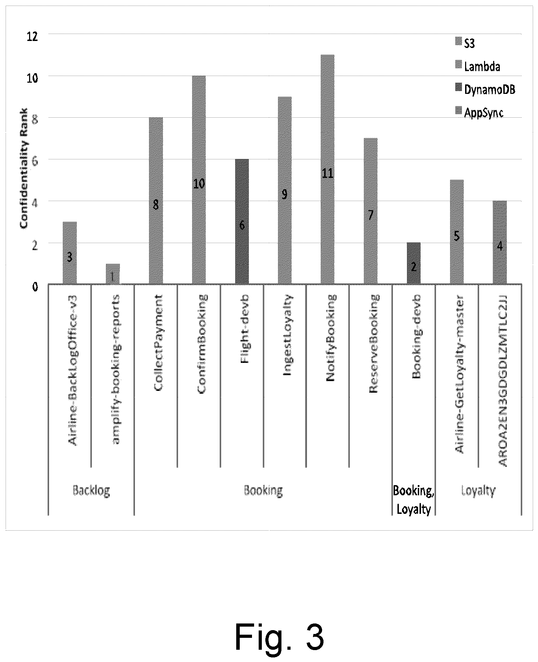

Fig. 3 illustrates the criticality of assets, an Airline Booking confidentiality ranking. Labels for processes are horizontal, and labels for resources' names are vertical. The application resources ranking presented in Fig. 3, shows that the most critical asset of the Airline Booking application is the amplify-booking-reports bucket. This result make sense, because that bucket is part of the Back office business process, which handles the application data and backs up users' information. The Loyalty and Booking processes were ranked evenly in their weights, and their data criticality ranks are equal. The process ranking impacts the final resource ranking, as the score is propagated by each level of the hierarchy. This explains the relatively high rank of the Airline-BackLogOffice-v3 function, which was ranked as the most critical function and has access to the most critical storage instance, the amplify-booking-reports.

As various embodiments and examples have been described and illustrated, it should be understood that variations will be apparent to one skilled in the art without departing from the principles herein. Accordingly, the invention is not to be limited to the specific embodiments described and illustrated in the drawings.

**REFERENCES**

[1] AWS. 2021. Amazon API Gateway. https://aws.amazon.com/api-gateway/.

[2] AWS. 2021. Amazon EventBridge. https://aws.amazon.com/eventbridge/.

[3] AWS. 2021. AWS Documentation. https://docs.aws.amazon.com/index.html.

[4] AWS. 2021. AWS Step Functions. https://aws.amazon.com/step-functions/.

[5] Gunjan Batra, Vijayalakshmi Atluri, Jaideep Vaidya, and Shamik Sural. 2019. Deploying ABAC policies using RBAC systems. Journal of computer security 27, 4 (2019), 483-506.

[6] ST Bharathi and C Bala Subramanian. 2022. Trust in Cloud: Perspective from Access Control Models and Machine Learning-A Detailed Study. In 2022 International Conference on Inventive Computation Technologies (ICICT). IEEE, 153-160.

[7] Ron Bitton, Nadav Maman, Inderjeet Singh, Satoru Momiyama, Yuval Elovici, and Asaf Shabtai. 2023. Evaluating the Cybersecurity Risk of Real-world, Machine Learning Production Systems. Comput. Surveys 55, 9 (2023), 1-36.

[8] Paul Castro, Vatche Ishakian, Vinod Muthusamy, and Aleksander Slominski. 2017. Serverless programming (function as a service). In 2017 IEEE 37th International Conference on Distributed Computing Systems (ICDCS). IEEE, 2658-2659.

[9] Paul Castro, Vatche Ishakian, Vinod Muthusamy, and Aleksander Slominski. 2019. The rise of serverless computing. Commun. ACM 62, 12 (2019), 44-54.

[10] Simon Eismann, Diego Elias Costa, Lizhi Liao, Cor-Paul Bezemer, Weiyi Shang, André van Hoorn, and Samuel Kounev. 2022. A case study on the stability of performance tests for serverless applications. Journal of Systems and Software 189 (2022), 111294. https://doi.org/10.1016/j.jss.2022.111294

[11] Simon Eismann, Joel Scheuner, Erwin Van Eyk, Maximilian Schwinger, Johannes Grohmann, Nikolas Herbst, Cristina L Abad, and Alexandru losup. 2020. Serverless applications: Why, when, and how? IEEE Software 38, 1 (2020), 32-39.

[12] Simon Eismann, Joel Scheuner, Erwin Van Eyk, Maximilian Schwinger, Johannes Grohmann, Nikolas Herbst, Cristina L Abad, and Alexandru losup. 2021. The state of serverless applications: Collection, characterization, and community consensus. IEEE Transactions on Software Engineering 48, 10 (2021), 4152-4166.

[13] Christian Genest, Johanna Nešlehová, and Noomen Ben Ghorbal. 2011. Estimators based on Kendall's tau in multivariate copula models. Australian & New Zealand Journal of Statistics 53, 2 (2011), 157-177.

[14] Google. 2022. Compare AWS and Azure services to Google Cloud. https://cloud. google.com/free/docs/aws-azure-gcp-service-comparison.

[15] Maurice G Kendall and B Babington Smith. 1940. On the method of paired comparisons. Biometrika 31, 3/4 (1940), 324-345.

[16] Philipp Leitner, Erik Wittern, Josef Spillner, and Waldemar Hummer. 2019. A mixed-method empirical study of Function-as-a-Service software development in industrial practice. Journal of Systems and Software 149 (2019), 340-359.

[17] Eduard Marin, Diego Perino, and Roberto Di Pietro. 2022. Serverless computing: a security perspective. Journal of Cloud Computing 11, 1 (2022), 1-12.

[18] MarketsandMarkets. 2020. Serverless Architecture Market by Service Type (Automation and Integration, Monitoring, API Management, Security, Analytics, and Design and Consulting), Deployment Model, Organization Size, Vertical, and Region - Global Forecast to 2025. https://www.marketsandmarkets.com/Market-

[19] Reports/serverless-architecture-market-64917099.html

[20] Ishaq Azhar Mohammed. 2019. Cloud identity and access management-a model proposal. International Journal of Innovations in Engineering Research and Technology 6, 10 (2019), 1-8.

[21] Tetiana Naumenko and Anatolii Petrenko. 2021. Analysis of problems of storage and processing of data in serverless technologies. Technology audit and production reserves 2, 2 (2021), 58.

[22] Ifeyinwa Juliet Orji, Simonov Kusi-Sarpong, Shuangfa Huang, and Diego Vazquez Brust. 2020. Evaluating the factors that influence blockchain adoption in the freight logistics industry. Transportation Research Part E: Logistics and Transportation Review 141 (2020), 102025.

[23] Fatemeh Khoda Parast, Chandni Sindhav, Seema Nikam, Hadiseh Izadi Yekta, Kenneth B Kent, and Saqib Hakak. 2022. Cloud computing security: A survey of service-based models. Computers & Security 114 (2022), 102580.

[24] RedHat. 2021. What is serverless? https://www.redhat.com/en/topics/cloud- native-apps/what-is-serverless.

[25] Thomas L Saaty. 2008. Decision making with the analytic hierarchy process.

[26] International journal of services sciences 1, 1 (2008), 83-98.

[27] Hossein Shafiei, Ahmad Khonsari, and Payam Mousavi. 2022. Serverless computing: a survey of opportunities, challenges, and applications. Comput. Surveys 54, 11s (2022), 1-32.

A computerized system for ranking the criticality of assets for serverless applications, comprising a server having at least one processor and associated software, which are adapted to prioritize assets within a serverless application based on their criticality level, using the AHP and Perimeterless ontology; decompose the prioritization task by generating a two-level hierarchy that includes a higher business process level and a lower asset type level; in the higher level, assign the resources of a given application to different business processes by the experts; in the lower level, automatically categorize each resource by an asset type, based on Perimeterless ontology; use the AHP to perform pairwise comparisons between the resources at each level; examine the internal consistency of each user, to ensure the validity of the prioritization process; choose the most critical assets to protect against potential cyberattacks.

**Claims**

1. A method for ranking the criticality of assets for serverless applications, comprising:

   a) prioritizing assets within a serverless application by a computerized device/server with at least one processor, a memory and associated software, based on their criticality level, using the Analytic Hierarchy Process (AHP) and Perimeterless ontology;
   b) decomposing the prioritization task by generating a two-level hierarchy that includes a higher business process level and a lower asset type level;
   c) in said business process higher level, assigning the resources of a given application to different business processes by experts;
   d) in said lower level, automatically categorizing each resource by an asset type, based on Perimeterless ontology;
   e) using said AHP to perform pairwise comparisons between the resources at each level;
   f) examining the internal consistency of each user, to ensure the validity of the prioritization process; and
   g) choosing the most critical assets to protect against potential cyberattacks.

2. The method according to claim 1, wherein the asset type is selected from the group of:

   - Lambda function;
   - DynamoDB.

3. The method according to claim 1, further comprising:

   a) differentiating between the importance of each resource by dividing the assets in each business process into disjoint groups according to their type;
   b) conducting a pairwise comparison in the context of one component of the CIA (confidentiality, integrity, availability) triad model using a pairwise comparison between the identified business processes;
   c) calculating the score for each asset according to the AHP for each annotator individually; and
   d) calculating an expert rating for any given resource by multiplying the criteria ranking.

4. The method according to claim 1, wherein the context is selected from the group of:

   - Confidentiality;
   - Integrity;
   - Availability.

5. The method according to claim 1, further comprising:

   a) deciding which business process is riskier with respect to the given context;
   b) comparing the business processes; and
   c) comparing the resources in each business process group.

6. The method according to claim 1, further comprising:

   a) dynamically validating internal consistency of each annotator during ranking, using the Consistency Ratio (CR) measure;
   b) examining the external agreement among different annotators using Kendall's W test;
   c) calculating the average score of each element at its respective level; and
   d) assigning a propagated score for each instance for each CIA context and for each service instance.

7. A computerized system for ranking the criticality of assets for serverless applications, comprising:

   a) a server having at least one processor and associated software, which are adapted to:
   b) prioritize assets within a serverless application based on their criticality level, using the AHP and Perimeterless ontology;

c) decompose the prioritization task by generating a two-level hierarchy that includes a higher business process level and a lower asset type level;

d) in said higher level, assign the resources of a given application to different business processes by the experts;

e) in said lower level, automatically categorize each resource by an asset type, based on the Perimeterless ontology;

f) use said AHP to perform pairwise comparisons between the resources at each level;

g) examine the internal consistency of each user, to ensure the validity of the prioritization process; and

h) choose the most critical assets to protect against potential cyberattacks.

8. The computerized system according to claim 7, in which the asset type is selected from the group of:

- Lambda function;
- DynamoDB.

9. The computerized system according to claim 1, which is further adapted to:

a) differentiate between the importance of each resource by dividing the assets in each business process into disjoint groups according to their type;

b) conduct a pairwise comparison in the context of one component of the CIA triad model using a pairwise comparison between the identified business processes;

c) calculate the score for each asset according to the AHP for each annotator individually; and

d) calculate an expert rating for any given resource by multiplying the criteria ranking.

10. The computerized system according to claim 1, in which the context is selected from the group of:

- Confidentiality;
- Integrity;
- Availability.

11. The computerized system according to claim 1, which is further adapted to:

a) decide which business process is riskier with respect to the given context;

b) compare the business processes;

c) compare the resources in each business process group.

12. The computerized system according to claim 1, which is further adapted to:

a) dynamically validate internal consistency of each annotator during ranking, using the Consistency Ratio (CR) measure;

b) examine the external agreement among different annotators using Kendall's W test;

c) calculate the average score of each element at its respective level; and

d) assign a propagated score for each instance for each CIA context and for each service instance.

Fig. 1

Airline Booking
Application

Booking
process

Loyalty
process

Back office
process

Compute
service

Storage
service

AppsSync
service

Compute
service

Storage
service

Compute
service

Storage
service

Fig. 2

Fig. 3

Europäisches
Patentamt
European
Patent Office
Office européen
des brevets

## EUROPEAN SEARCH REPORT

**Application Number**

EP 24 21 3580

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/362278 A1 (SARAF ATUL [IN] ET AL) 28 November 2019 (2019-11-28) * abstract * * paragraph [0024] * * paragraph [0049] - paragraph [0073] * * paragraph [0083] - paragraph [0097] * * figures 1, 2B, 3, 4A, 4B, 5 * ----- | 1-12 | INV. G06F21/57 |
| A | SAATY THOMAS L.: "Decision making with the analytic hierarchy process", INTERNATIONAL JOURNAL OF SERVICES SCIENCES, vol. 1, no. 1, 19 March 2008 (2008-03-19), page 83, XP093254656, ISSN: 1753-1446, DOI: 10.1504/IJSSCI.2008.017590 * the whole document * ----- | 1-12 | |
| A,P | LAVI BEN-SHIMOL ET AL: "Observability and Incident Response in Managed Serverless Environments Using Ontology-Based Log Monitoring", ARXIV.ORG, CORNELL UNIVERSITY LIBRARY, 201 OLIN LIBRARY CORNELL UNIVERSITY ITHACA, NY 14853, 12 May 2024 (2024-05-12), XP091754626, * the whole document * ----- | 1-12 | TECHNICAL FIELDS SEARCHED (IPC) G06F |

The present search report has been drawn up for all claims

| Place of search | Date of completion of the search | Examiner |
|---|---|---|
| Munich | 27 February 2025 | Bae, Jun-Young |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 3580

This annex lists the patent family members relating to the patent documents cited in  the above-mentioned European search report.
The members are as contained in the European Patent Office EDP file on
The European Patent Office is in no way liable for these particulars which are merely given for the purpose of information.

27-02-2025

| Patent document cited in search report | Publication date | Patent family member(s) | Publication date |
|---|---|---|---|
| US 2019362278 A1 | 28-11-2019 | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **BEN-SHOMOL et al.** *Observability and Incident Response in Managed Serverless Environments Using Ontology-Based Log Monitoring*, arxiv. org/html/2405.07172vl
- **GUNJAN BATRA** ; **VIJAYALAKSHMI ATLURI** ; **JAIDEEP VAIDYA** ; **SHAMIK SURAL**. Deploying ABAC policies using RBAC systems. *Journal of computer security 27*, 2019 (4), 483-506
- **ST BHARATHI** ; **C BALA SUBRAMANIAN**. Trust in Cloud: Perspective from Access Control Models and Machine Learning-A Detailed Study. *International Conference on Inventive Computation Technologies (ICICT)*, 2022, 153-160
- **RON BITTON** ; **NADAV MAMAN** ; **INDERJEET SINGH** ; **SATORU MOMIYAMA** ; **YUVAL ELOVICI** ; **ASAF SHABTAI**. Evaluating the Cybersecurity Risk of Real-world, Machine Learning Production Systems. *Comput. Surveys*, 2023, vol. 55 (9), 1-36
- **PAUL CASTRO** ; **VATCHE ISHAKIAN** ; **VINOD MUTHUSAMY** ; **ALEKSANDER SLOMINSKI**. Serverless programming (function as a service). *IEEE 37th International Conference on Distributed Computing Systems (ICDCS)*, 2017, 2658-2659
- **PAUL CASTRO** ; **VATCHE ISHAKIAN** ; **VINOD MUTHUSAMY** ; **ALEKSANDER SLOMINSK**. The rise of serverless computing. *Commun. ACM*, 2019, vol. 62 (12), 44-54
- **SIMON EISMANN** ; **DIEGO ELIAS COSTA** ; **LIZHI LIAO** ; **COR-PAUL BEZEMER** ; **WEIYI SHANG** ; **ANDRÉ VAN HOORN** ; **SAMUEL KOUNEV**. A case study on the stability of performance tests for serverless applications. *Journal of Systems and Software*, 2022, vol. 189, 111294
- **SIMON EISMANN** ; **JOEL SCHEUNER** ; **ERWIN VAN EYK** ; **MAXIMILIAN SCHWINGER** ; **JOHANNES GROHMANN** ; **NIKOLAS HERBST** ; **CRISTINA L ABAD** ; **ALEXANDRU LOSUP**. *IEEE Software*, 2020, vol. 38 (1), 32-39
- **SIMON EISMANN** ; **JOEL SCHEUNER** ; **ERWIN VAN EYK** ; **MAXIMILIAN SCHWINGER** ; **JOHANNES GROHMANN** ; **NIKOLAS HERBST** ; **CRISTINA L ABAD** ; **ALEXANDRU LOSUP**. *IEEE Transactions on Software Engineering*, 2021, vol. 48 (10), 4152-4166
- Google. *Compare AWS and Azure services to Google Cloud*, 2022, https://cloud. google.com/free/-docs/aws-azure-gcp-service-comparison
- **MAURICE G KENDALL** ; **B BABINGTON SMITH**. *Biometrika*, 1940, vol. 31 (3-4), 324-345

- **PHILIPP LEITNER** ; **ERIK WITTERN** ; **JOSEF SPILLNER** ; **WALDEMAR HUMMER**. A mixed-method empirical study of Function-as-a-Service software development in industrial practice. *Journal of Systems and Software*, 2019, vol. 149, 340-359
- **EDUARD MARIN** ; **DIEGO PERINO** ; **ROBERTO DI PIETRO**. Serverless computing: a security perspective. *Journal of Cloud Computing*, 2022, vol. 11 (1), 1-12
- **MARKETSANDMARKETS**. Serverless Architecture Market by Service Type (Automation and Integration, Monitoring, API Management, Security, Analytics, and Design and Consulting. *Deployment Model, Organization Size, Vertical, and Region - Global Forecast*, 2020, https://www.marketsandmarkets. com/Market
- **ISHAQ AZHAR MOHAMMED**. Cloud identity and access management-a model proposal. *International Journal of Innovations in Engineering Research and Technology*, 2019, vol. 6 (10), 1-8
- **TETIANA NAUMENKO** ; **ANATOLII PETRENKO**. Analysis of problems of storage and processing of data in serverless technologies. *Technology audit and production reserves*, 2021, 58
- **IFEYINWA JULIET ORJI** ; **SIMONOV KUSI-SARPONG** ; **SHUANGFA HUANG** ; **DIEGO VAZQUEZ BRUST**. Evaluating the factors that influence blockchain adoption in the freight logistics industry. *Transportation Research Part E: Logistics and Transportation Review*, 2020, vol. 141, 102025
- **FATEMEH KHODA PARAST** ; **CHANDNI SINDHAV** ; **SEEMA NIKAM** ; **HADISEH IZADI YEKTA** ; **KENNETH B KENT** ; **SAQIB HAKAK**. Cloud computing security: A survey of service-based models. *Computers & Security 114*, 2022, 102580
- **REDHAT**. *What is serverless*, 2021, https://www. redhat.com/en/topics/cloud- native-apps/what-is-serverless
- **THOMAS L SAATY**. *Decision making with the analytic hierarchy process*, 2008
- *International journal of services sciences*, 2008, vol. 1 (1), 83-98
- **HOSSEIN SHAFIEI** ; **AHMAD KHONSARI** ; **PAYAM MOUSAVI**. Serverless computing: a survey of opportunities, challenges, and applications. *Comput. Surveys 54*, 2022, 1-32